# EUROPÄISCHE PATENTSCHRIFT

(11) **EP 2 126 681 B1**
(45) Veröffentlichungstag und Bekanntmachung des Hinweises auf die Patenterteilung: **05.10.2011**
(21) Anmeldenummer: 08709007.2
(22) Anmeldetag: 14.02.2008
(51) Int. Cl.: G06F 3/14, G05B 23/02

(54) **VORRICHTUNG UND VERFAHREN ZUR VISUELLEN DARSTELLUNG EINER STATUSINFORMATION EINES TECHNISCHEN PROZESSES AUF MEHREREN BILDSCHIRMEN**
APPARATUS AND METHOD FOR VISUALLY DISPLAYING AN ITEM OF STATUS INFORMATION RELATING TO A TECHNICAL PROCESS ON A PLURALITY OF SCREENS
DISPOSITIF ET PROCÉDÉ DE REPRÉSENTATION VISUELLE D'UNE INFORMATION D'ÉTAT D'UN PROCESSUS TECHNIQUE SUR PLUSIEURS ÉCRANS

(30) Priorität: 15.02.2007 DE 102007007538
(43) Veröffentlichungstag der Anmeldung: 02.12.2009
(73) Patentinhaber: Siemens Aktiengesellschaft, 80333 München (DE)
(72) Erfinder: SYASSEN, Sven, 91074 Herzogenaurach (DE); NOLTE, Raimund, 57413 Finnentrop (DE)
(86) Internationale Anmeldenummer: PCT/EP2008/051817
(87) Internationale Veröffentlichungsnummer: WO 2008/098997

(56) Entgegenhaltungen:
- WO-A-2004/036410
- US-A- 5 631 825
- US-A1- 2003 142 037

## Beschreibung

Die Erfindung betrifft eine Vorrichtung zur visuellen Darstellung mindestens einer mittels eines Prozessvisualisierungssystems gewonnenen Statusinformation eines technischen Prozesses gemäß dem Oberbegriff des Anspruchs 1. Die Vorrichtung umfasst u. a. Bilderzeugungsmittel zum Erzeugen eines Bildes mit mindestens zwei Bildabschnitten, wobei in dem Bild ein dem Prozessvisualisierungssystem zugeordnetes Anzeigefenster darstellbar ist und in dem Anzeigefenster mindestens ein Informationsbereich zur Darstellung der Statusinformation vorgesehen ist. Dabei ist es vorgesehen, dass die Bilderzeugungsmittel mindestens zwei Bildschirme umfassen, von denen jeweils einer einen Bildabschnitt erzeugt. Weiterhin betrifft die Erfindung ein entsprechendes Verfahren zur visuellen Darstellung mindestens einer mittels eines Prozessvisualisierungssystems gewonnenen Statusinformation eines technischen Prozesses gemäß dem Oberbegriff des Anspruchs 5. Das Verfahren umfasst u. a. den Schritt des Bereitstellens von Bilderzeugungsmitteln zum Erzeugen eines Bildes mit mindestens zwei Bildabschnitten, wobei in dem Bild ein dem Prozessvisualisierungssystem zugeordnetes Anzeigefenster darstellbar ist und in dem Anzeigefenster mindestens ein Informationsbereich zur Darstellung der Statusinformation vorgesehen ist.

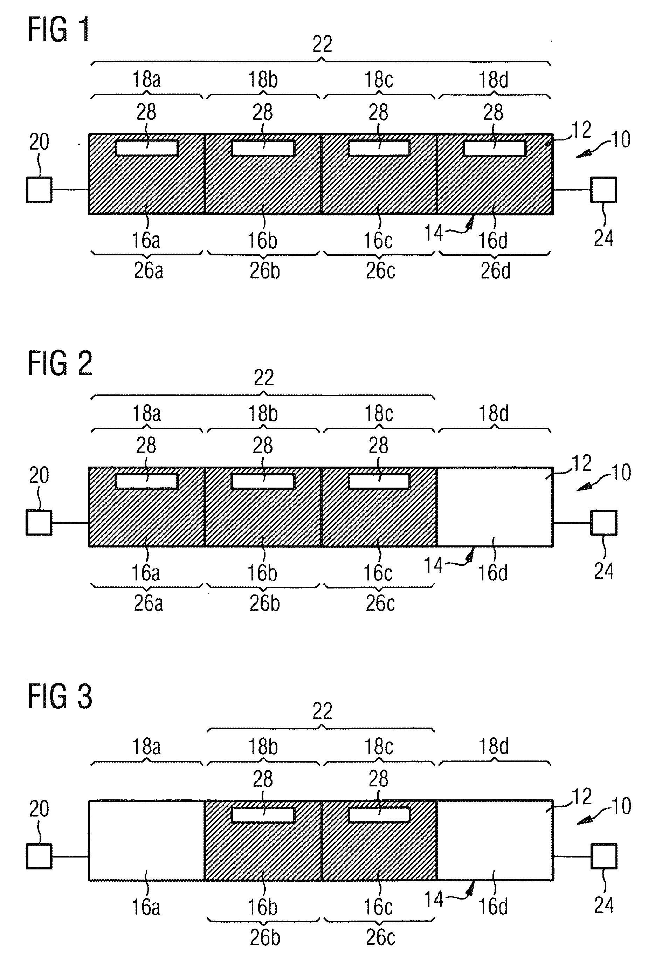

Eine Vorrichtung mit den oben genannten Merkmalen ist aus dem Dokument US 5 631 825 A bekannt (vgl. Fig. 1, 3 und 4 und die zugehörige Beschreibung, insbesondere Spalte 21, Zeilen 41 bis 67). Aus dem Dokument US 2003/0142037 A1 ist eine Treiberarchitektur bekannt, die eine Bilddarstellung auf einer Mehrzahl von Bildschirmen unterstützt, die zusammen wie ein einziger logischer bzw. virtueller Bildschirm behandelt werden. Dabei lassen sich Objektfester vom Benutzer über die Grenzen der physikalischen Bildschirme hinweg verschieben, sind aber jeweils nur auf demjenigen Bildschirm "aktiv", auf dem sich der Hauptanteil des Fensters befindet (vgl. Fig. 7A und 7B sowie die zugehörige Beschreibung, insbesondere Absätze 0044 bis 0046). Ein ähnliches Konzept ist aus dem Dokument WO 2004/036410 A1 bekannt (vgl. beispielsweise Seite 4, Zeilen 6 bis 15).

Prozessvisualisierungssysteme (englisch: SCADA systems - supervisory control and data acquisition systems) dienen der Darstellung von Statusinformationen von technischen Prozessen und Anlagenzuständen in einer benutzerfreundlichen Weise. Die Statusinformationen können Schalterstellungen oder auch mittels Messgeräten erfasste Betriebsinformationen einer zu Grunde liegenden technischen Anlage umfassen. Zur Darstellung mindestens einer Statusinformation, die bei komplexen Systemen in der Regel eine in hoher Weise verdichtete Information, in der Regel eine aus einer Vielzahl von Einzelinformationen berechnete Statusinformation ist, wird die eingangs genannte Vorrichtung genutzt. Zur Darstellung der einzelnen Bildabschnitte werden häufig mehrere Bildschirme (multiscreen environment) verwendet. Dabei sollte aus ergonomischen Gründen die Statusinformation auf möglichst vielen Bildschirmen, idealerweise auf jedem Bildschirm dargestellt werden. Bei Arbeitsplätzen dieser Art werden häufig auch zeitweise Bildschirme oder Teile der Gesamtbildfläche zur Darstellung von Informationen genutzt, die nicht von dem Prozessvisualisierungssystem stammen. Die von dem Prozessvisualisierungssystem stammenden Informationen dagegen werden in einem dem Prozessvisualisierungssystem zugeordneten Anzeigefenster dargestellt.

Um sicher zu stellen, dass die mittels des Prozessvisualisierungssystems gewonnene mindestens eine Statusinformation auf möglichst vielen Bildschirmen dargestellt wird, sind bei Visualisierungsvorrichtungen aus dem Stand der Technik eine sehr begrenzte Anzahl von Konfigurationen des Anzeigefensters und damit Darstellungs-Szenarien vorgegeben. Der Benutzer kann im Betrieb der Anlage lediglich eine dieser vorkonfigurierten Darstellungsarten manuell auswählen. Damit ist der Benutzer sehr eingeschränkt in Hinblick auf die Nutzung der Bildfläche für vom Prozessvisualisierungssystem unabhängige Anwendungen.

Es ist eine Aufgabe der Erfindung, die vorgenannten Probleme zu lösen und insbesondere eine Vorrichtung bzw. ein Verfahren der eingangs genannten Art dahingehend zu verbessern, dass der Benutzer eine größere Flexibilität bei der Nutzung der Bildfläche erhält, jedoch gleichzeitig auf eine geeignete Weise über den Status des mittels des Prozessvisualisierungssystems überwachten technischen Prozesses informiert wird.

Die Aufgabe ist erfindungsgemäß mit einer Vorrichtung gemäß Anspruch 1 sowie einem Verfahren gemäß Anspruch 5 gelöst. Vorteilhafte Weiterbildungen der Erfindung sind in den abhängigen Ansprüchen beschrieben.

Gemäß der Erfindung wird eine gattungsgemäße Vorrichtung bereitgestellt, bei der das Anzeigefenster von einem Benutzer innerhalb des Bildes stufenlos konfigurierbar ist und die Vorrichtung dazu eingerichtet ist, die vom Benutzer vorgenommene Konfiguration des Anzeigefensters zu erfassen, jeweilige in einzelnen Bildabschnitten gelegene Bildabschnittsbereiche des Anzeigefensters zu bestimmen, die bestimmten Bildabschnittsbereiche mit einem vorgegebenen Auswahlkriterium zu vergleichen und in jedem das Auswahlkriterium erfüllenden Bildabschnittsbereich des Anzeigefensters automatisch einen Informationsbereich anzuordnen. Erfindungsgemäß definiert das vorgegebene Auswahlkriterium eine Mindestgröße des Bildabschnittsbereichs in zumindest einer Bilddimension, insbesondere in einer horizontalen Bilddimension.

Weiterhin ist erfindungsgemäß ein gattungsgemäßes Verfahren bereitgestellt, welches durch die folgenden Schritte gekennzeichnet ist: stufenloses Konfigurieren des Anzeigefensters innerhalb des Bildes durch einen Benutzer, automatisches Erfassen der vom Benutzer vorgenommenen Konfiguration des Anzeigefensters, Bestimmen jeweiliger in den einzelnen Bildabschnitten gelegener Bildabschnittsbereiche des Anzeigefensters, sowie Vergleichen der bestimmten Bildabschnittsbereichen mit einem vorgegebenen Auswahlkriterium und automatisches Anordnen eines Informationsbereichs in jedem das Auswahlkriterium erfüllenden Bildabschnittsbereiche des Anzeigefensters. Erfindungsgemäß definiert das vorgegebene Auswahlkriterium eine Mindestgröße des Bildabschnittsbereichs in zumindest einer Bilddimension, insbesondere in einer horizontalen Bilddimension.

Gemäß der Erfindung ist das dem Prozessvisualisierungssystem zugeordnete Anzeigefenster innerhalb des Bildes stufenlos konfigurierbar. Damit kann die Form, Größe und/oder Position des Anzeigefensters vom Benutzer frei gewählt werden. Mit anderen Worten kann das Anzeigefenster vom Benutzer über mehrere Bildabschnitte, und damit beispielsweise über mehrere Bildschirme des Arbeitsplatzes, beliebig aufgespannt werden. Form, Größe und/oder Position des Anzeigefensters werden von der Vorrichtung dynamisch überwacht. Jeweilige in einzelnen Bildabschnitten gelegene Bildabschnittsbereiche des Anzeigefensters werden daraufhin von der Vorrichtung bestimmt. Dies geschieht etwa, indem Größe und Position des Anzeigefensters mit den vom Betriebssystem gelieferten Informationen über die vorhandenen Bildabschnitte bzw. Bildschirme verglichen werden.

Der Bildabschnittsbereich kann ein Teilbereich des Anzeigefensters sein, wenn sich das Anzeigefenster über mehrere Bildabschnitte erstreckt. In dem Fall, in dem das Anzeigefenster lediglich in einem Bildabschnitt angeordnet ist, stimmt der diesem Bildabschnitt zugeordnete Bildabschnittsbereich mit dem Anzeigefenster überein.

Durch Vergleich der bestimmten Bildabschnittsbereiche mit einem vorgegebenen Auswahlkriterium wird festgestellt, in welchen Bildabschnittsbereichen des Anzeigefensters ein Informationsbereich sinnvoll angeordnet werden kann. So kann das Auswahlkriterium beispielsweise eine Mindestgröße für die Bildabschnittsbereiche definieren, in denen ein Informationsbereich angeordnet wird. Schließlich ordnet die Vorrichtung erfindungsgemäß in jeden das Auswahlkriterium erfüllenden Bildabschnittsbereich des Anzeigefensters automatisch einen Informationsbereich zur Darstellung der Statusinformation an.

Durch die erfindungsgemäße Möglichkeit, das Anzeigefenster innerhalb des gesamten Bildes stufenlos zu konfigurieren, ist dem Benutzer eine größere Flexibilität bei der Nutzung der gesamten Bildfläche gegeben. Der Benutzer kann damit eine auf seinen individuellen Bedarf abgestimmte Bildfläche zu einer, von dem Prozessvisualisierungssystem unabhängigen Nutzung freimachen. Gleichzeitig wird der Benutzer aber durch die erfindungsgemäße automatische Anordnung des Informationsbereichs in allen geeigneten Bildabschnittsbereichen des Anzeigefensters auf ergonomische Weise weiterhin über den Status des technischen Prozesses informiert. Eine manuelle Vorkonfigurierung unterschiedlicher Darstellungsszenarien ist damit gemäß der Erfindung nicht mehr notwendig. Damit ergeben sich reduzierte Engineering-Kosten bei gleichzeitig flexibler Nutzung des Arbeitsplatzes.

Vorzugsweise definiert das Auswahlkriterium die Mindestgröße des Bildabschnittsbereichs derart, dass die Statusinformation noch für den Benutzer gut lesbar in dem verbliebenen Bildabschnittsbereich darstellbar ist.

Das Gesamtbild wird mittels mehrerer Bildschirme, die vorzugsweise nebeneinander angeordnet sind, erzeugt. Das Gesamtbild muss nicht zwingend zusammenhängend dargestellt werden. Die Bildschirme können auch in einem gewissen Abstand zueinander angeordnet sein.

Weiterhin ist es vorteilhaft, wenn die Vorrichtung dazu eingerichtet ist, bei der jeweiligen Anordnung eines Informationsbereichs in einem geeigneten Bildabschnittsbereich die Position und/oder Größe des Informationsbereichs an die Form und/oder Größe des entsprechenden Bildabschnittsbereichs anzupassen. So kann in dem Fall, in dem ein Bildabschnittsbereich in einem bestimmten Bildabschnitt eine typische Größe des Informationsbereichs unterschreitet, der Informationsbereich entsprechend verkleinert werden, solange dadurch weiterhin die Lesbarkeit der angezeigten Statusinformation gewährleistet ist.

Weiterhin ist es zweckmäßig, wenn das Anzeigefenster innerhalb des Bildes derart konfigurierbar ist, dass sich das Anzeigefenster über mindestens zwei Bildabschnitte erstreckt. Damit bietet das Anzeigefenster ausreichend Raum zur Darstellung von komplexen, mittels des Prozessvisualisierungssystems über den technischen Prozess gewonnenen Informationen. Weiterhin ist es vorteilhaft, wenn in jedem der mindestens zwei Bildabschnitte ein Informationsbereich angeordnet ist, um den Benutzer die wichtige Statusinformation über den technischen Prozess auf ergonomische Weise anzuzeigen. Weiterhin wird dadurch sichergestellt, dass die Statusinformation im Blickfeld des Benutzers angeordnet ist und damit der Benutzer in die Lage versetzt wird, eine Veränderung der Statusinformation, die ein aktives Eingreifen von Seiten des Benutzers erforderlich macht, rechtzeitig zu erkennen.

Weiterhin ist es vorteilhaft, wenn die Vorrichtung dazu eingerichtet ist, den mindestens einen Informationsbereich in einem nicht verdeckbaren Bereich des Anzeigefensters anzuordnen. Damit wird sichergestellt, dass die Statusinformation in jeder Situation für den Benutzer sichtbar bleibt. Diese Maßname stellt sicher, dass Zustände des technischen Prozesses, welche ein Eingreifen des Benutzers erforderlich machen, diesem jederzeit über die Statusinformation transparent gemacht werden.

Die bezüglich der vorstehend aufgeführten vorteilhaften Ausführungsformen der erfindungsgemäßen Vorrichtung angegebenen Merkmale können entsprechend auf das erfindungsgemäße Verfahren übertragen werden. Die sich daraus ergebenden vorteilhaften Ausführungsformen des erfindungsgemäßen Verfahrens sollen von der Offenbarung der Erfindung ausdrücklich umfasst sein. Weiterhin beziehen sich die bezüglich der vorteilhaften Ausführungsformen der erfindungsgemäßen Vorrichtung vorstehend aufgeführten Vorteile damit auch auf die entsprechenden vorteilhaften Ausführungsformen des erfindungsgemäßen Verfahrens.

Nachfolgend wird ein Ausführungsbeispiel einer erfindungsgemäßen Vorrichtung sowie eines Verfahrens zur visuellen Darstellung einer mittels eines Prozessvisualisierungssystems gewonnenen Statusinformation eines technischen Prozesses anhand der beigefügten schematischen Zeichnungen näher erläutert. Es zeigt:
- Fig. 1: eine schematische Darstellung eines Ausführungsbeispiels einer Vorrichtung nach der Erfindung in einem ersten Betriebszustand,
- Fig. 2: die Vorrichtung gemäß Fig. 1 in einem zweiten Betriebszustand,
- Fig. 3: die Vorrichtung gemäß Fig. 1 in einem dritten Betriebszustand,
- Fig. 4: die Vorrichtung gemäß Fig. 1 in einem vierten Betriebszustand, sowie
- Fig. 5: die Vorrichtung gemäß Fig. 1 in einem fünften Betriebszustand.

Fig. 1 bis 5 zeigen ein erfindungsgemäßes Ausführungsbeispiel einer Vorrichtung 10 zur visuellen Darstellung mindestens einer mittels eines Prozessvisualisierungssystems gewonnenen Statusinformation eines technischen Prozesses in unterschiedlichen Betriebszuständen. Ein derartiges Prozessvisualisierungssystem wird auch als SCADA-System bezeichnet (SCADA: supervisory control and data acquisition).

Die mittels des Prozessvisualisierungssystems gewonnene Statusinformation des technischen Prozesses ist vorteilhafterweise eine hochverdichtete Prozessinformation, beispielsweise eine aus einer Vielzahl von Informationen generierte Statusinformation, mittels der Fehlentwicklungen im überwachten technischen Prozess schnell erkannt werden können. Die Vorrichtung 10 umfasst Bilderzeugungsmittel 12 zum Erzeugen eines Bildes 14. Die Bilderzeugungsmittel 12 umfassen im vorliegenden Fall mehrere nebeneinander angeordnete Bildschirme 16a, 16b, 16c und 16d. Jeder der Bildschirme 16a, 16b, 16c und 16d erzeugt einen jeweiligen Bildabschnitt 18a, 18b, 18c bzw. 18d. Alle Bildabschnitte 18a, 18b, 18c und 18d zusammengenommen bilden das Bild 14.

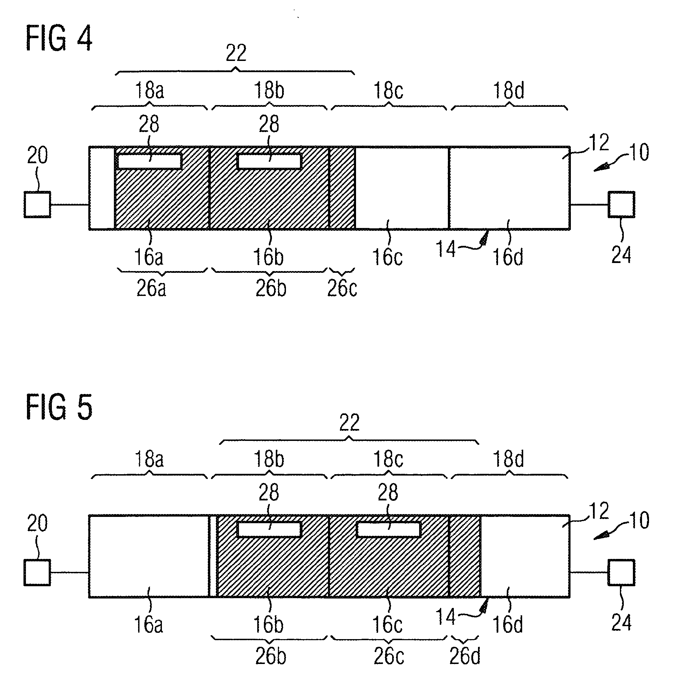

Die Vorrichtung 10 weist weiterhin Bedienungsmittel 20 zum Konfigurieren eines Anzeigefensters 22 innerhalb des Bildes 14 durch den Benutzer auf. Das Anzeigefenster 22 kann so konfiguriert werden, dass es sich über mehrere Bildschirme 16a, 16b, 16c und/oder 16d bzw. Bildabschnitte 18a, 18b, 18c und/oder 18d erstrecket. Im in Fig. 1 dargestellten Betriebszustand der Vorrichtung 10 erstreckt sich das Anzeigefenster 22 über alle vier Bildabschnitte 18a, 18b, 18c und 18d, im Betriebszustand gemäß Fig. 2 lediglich über die Bildabschnitte 18a, 18b und 18c und im Betriebszustand gemäß Fig. 3 lediglich über die Bildabschnitte 18b und 18c. Im Betriebszustand gemäß Fig. 4 erstreckt sich das Anzeigefenster 22 lediglich teilweise im Bildabschnitt 18a und 18c sowie vollständig im Bildabschnitt 18b. Im Betriebszustand gemäß Fig. 5 erstreckt sich das Anzeigefenster 22 fasst vollständig im Bildabschnitt 18b, vollständig im Bildabschnitt 18c und zu einem geringen Anteil im Bildabschnitt 18d.

In den Fig. ist damit exemplarisch veranschaulicht, dass das Anzeigefenster 22 innerhalb des Bildes 14 und damit über alle Bildschirme 16a, 16b, 16c und 16d stufenlos flexibel konfigurierbar und somit hinsichtlich Größe und/oder Position frei definierbar ist. Das Anzeigefenster 22 kann also vom Bediener über mehrere Bildschirme 16a, 16b, 16c und 16d beliebig aufgespannt werden.

Weiterhin umfasst die Vorrichtung 10 Bildsteuerungsmittel 24, welche dazu eingerichtet sind, die vom Benutzer vorgenommene Konfiguration des Anzeigefensters 22 zu erfassen und jeweilige in den einzelnen Bildabschnitten 18a, 18b, 18c und 18d gelegene Bildabschnittsbereiche 26a, 26b, 26c bzw. 26d des Anzeigefensters 22 zu bestimmen. Die Bildabschnittsbereiche 26a, 26b, 26c bzw. 26d sind also als diejenigen Bereiche des Anzeigefensters 14 definiert, die in einem jeweiligen Bildabschnitt 18a, 18b, 18c bzw. 18d liegen. Im Betriebszustand gemäß Fig. 1 entsprechen die Bildabschnittsbereiche 26a, 26b, 26c und 26d jeweils den Bildabschnitten 18a, 18b, 18c und 18d, im Betriebszustand gemäß Fig. 2 entsprechen die Bildabschnittsbereiche 26a, 26b und 26c jeweils den Bildabschnitten 18a, 18b und 18c sowie im Betriebszustand gemäß Fig. 3 entsprechen die Bildabschnittsbereiche 26b und 26c jeweils den Bildabschnitten 18b und 18c. In Fig. 4 nehmen die Bildabschnittsbereiche 26a und 26c lediglich einen Teil der jeweiligen Bildabschnitte 18a und 18c ein. Das Gleiche gilt für die Bildabschnittsbereiche 26b und 26d gemäß Fig. 5.

Weiterhin vergleichen die Bildsteuerungsmittel 24, die bestimmten Bildabschnittsbereiche 26a, 26b, 26c bzw. 26d mit einem vorgegebenen Auswahlkriterium, beispielsweise in Form einer Mindestgröße des jeweiligen Bildabschnittsbereichs in horizontaler Richtung. Diese Mindestgröße ist beispielsweise derart gewählt, dass die Statusinformation im entsprechenden Informationsbereich 28 lesbar darstellbar ist. Die Bildsteuerungsmittel 24 ordnen dann in jedem der das Auswahlkriterium erfüllenden Bildabschnittsbereiche 26a, 26b, 26c bzw. 26d einen derartigen Informationsbereich 28 an einer geeigneten Position an. Damit bestimmen die Bildsteuerungsmittel 24 sowohl die Anzahl als auch die Position der Informationsbereiche 28 im Anzeigefenster 22.

In den Betriebszuständen gemäß den Fig. 1 bis 3 ist in jedem der Bildabschnittsbereiche ein Informationsbereich 28 angeordnet. In dem Betriebszustand gemäß Fig. 4 erfüllt der Bildabschnittsbereich 26c hinsichtlich seiner horizontalen Ausdehnung nicht das Auswahlkriterium, weshalb hier kein Informationsbereich 28 angeordnet ist. Das Gleiche gilt für den Bildabschnittsbereich 26d gemäß Fig. 5. Im Bildabschnittsbereich 26a gemäß Fig. 4 ist die horizontale Ausdehnung ausreichend zur Darstellung eines Informationsbereichs 28. Dieser ist bzgl. seiner Position mittig im Bildabschnittsbereich 26a angeordnet. Das Gleiche gilt für den Bildabschnittsbereich 26b gemäß Fig. 5.

### Bezugszeichenliste

- 10: Vorrichtung
- 12: Bilderzeugungsmittel
- 14: Bild
- 16a: Bildschirm
- 16b: Bildschirm
- 16c: Bildschirm
- 16d: Bildschirm
- 18a: Bildabschnitt
- 18b: Bildabschnitt
- 18c: Bildabschnitt
- 18d: Bildabschnitt
- 20: Bedienungsmittel
- 22: Anzeigefenster
- 24: Bildsteuerungsmittel
- 26a: Bildabschnittsbereich
- 26b: Bildabschnittsbereich
- 26c: Bildabschnittsbereich
- 26d: Bildabschnittsbereich
- 28: Informationsbereich

## Patentansprüche

1. Vorrichtung (10), zur visuellen Darstellung mindestens einer mittels eines Prozessvisualisierungssystems gewonnenen Statusinformation eines technischen Prozesses, mit Bilderzeugungsmitteln (12) zum Erzeugen eines Bildes (14) mit mindestens zwei Bildabschnitten (18a, 18b, 18c, 18d), wobei die Bilderzeugungsmittel (12) mindestens zwei Bildschirme (16a, 16b, 16c, 16d) umfassen, von denen jeweils einer einen Bildabschnitt (18a, 18b, 18c, 18d) erzeugt, wobei in dem Bild (14) ein dem Prozessvisualisierungssystem zugeordnetes Anzeigefenster (22) darstellbar ist und in dem Anzeigefenster (22) mindestens ein Informationsbereich (28) zur Darstellung der Statusinformation vorgesehen ist, wobei die Größe des Anzeigefensters (22) von einem Benutzer innerhalb des Bildes (14) stufenlos konfigurierbar ist und die Vorrichtung (10) weiterhin Bildsteuerungsmittel (24) aufweist, die dazu eingerichtet sind, die vom Benutzer vorgenommene Konfiguration des Anzeigefensters (22) zu erfassen,
**dadurch gekennzeichnet, dass** die Bildsteuerungsmittel (24) dazu eingerichtet sind, jeweilige in einzelnen Bildabschnitten (18a, 18b, 18c, 18d) gelegene Bildabschnittsbereiche (26a, 26b, 26c, 26d) des Anzeigefensters zu bestimmen, die bestimmten Bildabschnittsbereiche (26a, 26b, 26c, 26d) mit einem vorgegebenen Auswahlkriterium zu vergleichen und in jedem das Auswahlkriterium erfüllenden Bildabschnittsbereich (26a, 26b, 26c, 26d) des Anzeigefensters automatisch den jeweiligen Informationsbereich (28) anzuordnen, und wobei das vorgegebene Auswahlkriterium eine Mindestgröße des Bildabschnittsbereichs (26a, 26b, 26c, 26d) in zumindest einer Bilddimension, insbesondere in einer horizontalen Bilddimension, definiert.

2. Vorrichtung nach Anspruch 1,
**dadurch gekennzeichnet, dass** die Vorrichtung (10) dazu eingerichtet ist, bei der jeweiligen Anordnung eines Informationsbereichs (28) in einem geeigneten Bildabschnittsbereich (26a, 26b, 26c, 26d) die Position und/oder Größe des Informationsbereichs (28) an die Form und/oder Größe des entsprechenden Bildabschnittsbereichs (26a, 26b, 26c, 26d) anzupassen.

3. Vorrichtung nach einem der vorausgehenden Ansprüche, **dadurch gekennzeichnet, dass** das Anzeigefenster innerhalb des Bildes (14) derart konfigurierbar ist, dass sich das Anzeigefenster über mindestens zwei Bildabschnitte (18a, 18b, 18c, 18d) erstreckt.

4. Vorrichtung nach einem der vorausgehenden Ansprüche, **dadurch gekennzeichnet, dass** die Vorrichtung (10) dazu eingerichtet ist, den mindestens einen Informationsbereich (28) in einem nicht verdeckbaren Bereich des Anzeigefensters (22) anzuordnen.

5. Verfahren zur visuellen Darstellung mindestens einer mittels eines Prozessvisualisierungssystems gewonnenen Statusinformation eines technischen Prozesses, insbesondere mittels einer Vorrichtung (10) nach einem der vorausgehenden Ansprüche, bei dem Bilderzeugungsmittel (12) zum Erzeugen eines Bildes mit mindestens zwei Bildabschnitten (18a, 18b, 18c, 18d) bereitgestellt werden, wobei die Bilderzeugungsmittel (12) mindestens zwei Bildschirme (16a, 16b, 16c, 16d) umfassen, von denen jeweils einer einen Bildabschnitt (18a, 18b, 18c, 18d) erzeugt, wobei in dem Bild (14) ein dem Prozessvisualisierungssystem zugeordnetes Anzeigefenster (22) darstellbar ist und in dem Anzeigefenster (22) mindestens ein Informationsbereich (28) zur Darstellung der Statusinformation vorgesehen ist, wobei die folgenden Schritte durchgeführt werden:
- stufenloses Konfigurieren der Größe des Anzeigefensters (22) innerhalb des Bildes durch einen Benutzer,
- automatisches Erfassen der vom Benutzer vorgenommenen Konfiguration des Anzeigefensters (22),
**gekennzeichnet durch** die Schritte:
- Bestimmen jeweiliger in den einzelnen Bildabschnitten(18a, 18b, 18c, 18d) gelegener Bildabschnittsbereiche (26a, 26b, 26c, 26d) des Anzeigefensters (22), sowie
- Vergleichen der bestimmten Bildabschnittsbereiche (26a, 26b, 26c, 26d) mit einem vorgegebenen Auswahlkriterium und automatisches Anordnen des jeweiligen Informationsbereichs (28) in jedem das Auswahlkriterium erfüllenden Bildabschnittsbereiche (26a, 26b, 26c, 26d) des Anzeigefensters (22),
- wobei als das vorgegebene Auswahlkriterium eine Mindestgröße des Bildabschnittsbereichs (26a, 26b, 26c, 26d) in zumindest einer Bilddimension, insbesondere in einer horizontalen Bilddimension, herangezogen wird.

## Claims

1. Apparatus (10) for visually displaying at least one item of status information which relates to a technical process and has been obtained using a process visualization system, comprising image generating means (12) for generating an image (14) with at least two image sections (18a, 18b, 18c, 18d), with the image generating means (12) comprising at least two screens (16a, 16b, 16c, 16d), of which one screen generates an image section (18a, 18b, 18c, 18d) in each case, with a display window (22) which is associated with the process visualization system being displayable in the image (14) and at least one information region (28) for displaying the status information being provided in the display window (22), with the size of the display window (22) able to be steplessly configured by a user within the image (14) and the apparatus (10) also having image control means (24), which are set up to detect the configuration of the display window (22) which is performed by the user,
**characterised in that** the image control means (24) is set up to determine respective image section regions (26a, 26b, 26c, 26d) of the display window located in individual image sections (18a, 18b, 18c, 18d), to compare the determined image section regions (26a, 26b, 26c, 26d) with a predetermined selection criterion and to automatically arrange an information region (28) in each image section region (26a, 26b, 26c, 26d) of the display window which fulfils the selection criterion, and with the predetermined selection criterion defining a minimum size of the image section region (26a, 26b, 26c, 26d) in at least one image dimension, especially in a horizontal image dimension.

2. Apparatus according to claim 1,
**characterised in that**, in the event of the respective arrangement of an information region (28) in a suitable image section region (26a, 26b, 26c, 26d), the apparatus (10) is set up to adjust the position and/or size of the information region (28) to the shape and/or size of the corresponding image section region (26a, 26b, 26c, 26d).

3. Apparatus according to one of the preceding claims, **characterised in that** the display window can be configured within the image (14) such that the display window extends over at least two image sections (18a, 18b, 18c, 18d).

4. Apparatus according to one of the preceding claims, **characterised in that** the apparatus (10) is set up to arrange the at least one information region (28) in a region of the display window (22) that cannot be hidden.

5. Method for visually displaying at least one item of status information which relates to a technical process and was obtained by means of a process visualization system, in particular by means of an apparatus (10) according to one of the preceding claims, in which image generating means (12) for generating an image comprising at least two image sections (18a, 18b, 18c, 18d) are provided, with the image generating means (12) comprising at least two screens 16a, 16b, 16c, 16d), of which one screen in each case generates an image section (18a, 18b, 18c, 18d), with a display window (22) assigned to the process visualization system being displayable in the image (14) and at least one information region (28) for displaying the status information being provided in the display window (22), with the following steps being carried out:
- stepless configuration by a user of the size of the display window (22) within the image,
- automatic detection of the configuration of the display window (22) performed by the user,
**characterised by** the steps:
- determination of image section regions (26a, 26b, 26c, 26d) of the display window (22) positioned respectively in the individual image sections (18a, 18b, 18c, 18d), and
- comparison of the determined image section regions (26a, 26b, 26c, 26d) with a predetermined selection criterion and automatic arrangement of an information region (28) in each image section region (26a, 26b, 26c, 26d) of the display window (22) satisfying the selection criterion,
- with a minimum size of the image section region (26a, 26b, 26c, 26d) in at least one image dimension, especially in a horizontal image dimension, being included as the predetermined selection criterion.

## Revendications

1. Dispositif ( 10 ) de représentation visuelle, d'au moins une information de statut d'un processus technique obtenue au moyen d'un système de visualisation de processus, comprenant des moyens ( 12 ) de production d'une image ( 14 ) ayant au moins deux segments ( 18a, 18b, 18c, 18d ) d'image, les moyens ( 12 ) de production d'image comprenant au moins deux écrans ( 16a, 16b, 16c, 16d ), dont l'un respectivement produit un segment (18a, 18b, 18c, 18d) d'image, dans lequel, dans l'image (14), une fenêtre (22) d'affichage associée au système de visualisation de processus peut être présentée et, dans la fenêtre ( 22 ) d'affichage, il est prévu au moins une zone (28) d'information pour la représentation de l'information de statut, la dimension de la fenêtre ( 22 ) d'affichage pouvant être configurée d'une manière continue à l'intérieur de l'image (14) par un utilisateur et le dispositif ( 10 ) a, en outre, des moyens ( 24 ) de commande d'image pour détecter la configuration de la fenêtre ( 22 ) d'affichage effectuée par l'utilisateur,
**caractérisé en ce que** les moyens ( 24 ) de commande d'image sont conçus pour déterminer respectivement des zones ( 26a, 26b, 26c, 26d ) de segment d'image de la fenêtre d'affichage mises dans des segments ( 18a, 18b, 18c, 18d ) d'image individuels, pour comparer les zones ( 26a, 26b, 26c, 26d ) de segment d'image déterminées à un critère de sélection prescrit et pour mettre automatiquement la zone ( 28 ) d'information respective dans la zone ( 26a, 26b, 26c, 26d ) de segment d'image de la fenêtre d'affichage satisfaisant le critère de sélection et dans lequel le critère de sélection prescrit définit une grandeur minimum de la zone ( 26a, 26b, 26c, 26d ) de segment d'image dans au moins une dimension de l'image, notamment dans une dimension horizontale de l'image.

2. Dispositif suivant la revendication 1, **caractérisé en ce que** le dispositif (10) est conçu pour, dans l'agencement respectif d'une zone ( 28 ) d'information dans une zone ( 26a, 26b, 26c, 26d) de segment d'image appropriée, adapter la position et/ou la grandeur de la zone ( 28 ) d'information et la forme et/ou à la dimension de la zone (26a, 26b, 26c, 26d ) de segment d'image correspondante.

3. Dispositif suivant l'une des revendications précédentes, **caractérisé en ce que** la fenêtre d'affichage peut être configurée à l'intérieur de l'image ( 14 ), de manière à ce que la fenêtre d'affichage s'étende sur au moins deux segments ( 18a, 18b, 18c, 18d ) d'image.

4. Dispositif suivant l'une des revendications précédentes, **caractérisé en ce que** le dispositif ( 10 ) est conçu pour mettre la au moins une zone ( 28 ) d'information dans une zone de la fenêtre (22) d'affichage qui ne peut pas être recouverte.

5. Procédé de représentation visuelle, d'au moins une information de statut d'un processus technique obtenue au moyen d'un système de visualisation de processus, notamment au moyen d'un dispositif ( 10 ) suivant l'une des revendications précédentes, dans lequel on se procure des moyens ( 12 ) de production d'une image ayant au moins deux segments ( 18a, 18b, 18c, 18d ) d'image, dans lequel les moyens (12) de production d'image comprennent au moins deux écrans ( 16a, 16b, 16c, 16d ), dont respectivement l'un produit un segment ( 18a, 18b, 18c, 18d ) d'image, dans lequel dans l'image
( 14 ), une fenêtre ( 22 ) d'affichage associée au système de visualisation de processus peut être représentée et, dans la fenêtre (22) d'affichage, il est prévu au moins une zone ( 28 ) d'information pour la représentation de l'information de statut, dans lequel on effectue les stades de procédé suivants :
- configuration en continu de la dimension de la fenêtre ( 22 ) d'affichage dans l'image par un utilisateur,
- détection automatique de la configuration de la fenêtre ( 22 ) d'affichage effectuée par l'utilisateur,
**caractérisé par** les stades :
- détermination des zones (26a, 26b, 26c, 26d) de segment d'image respectives mises dans les segments ( 18a, 18b, 18c, 18d ) d'image individuels, ainsi que
- comparaison des zones ( 26a, 26b, 26c, 26d) de segment d'images déterminées avec un critère de sélection prescrit et mise automatique de la zone ( 28 ) respective d'information dans chaque zone ( 26a, 26b, 26c, 26d ) de segment d'image de la fenêtre d'affichage satisfaisant le critère de sélection,
- dans lequel on utilise, comme critère de sélection prescrit, une grandeur minimum de la zone ( 26a, 26b, 26c, 26d ) de segment d'image dans au moins une dimension de l'image, notamment dans une dimension horizontale de l'image.
